Europäisches Patentamt

European Patent Office

Office européen des brevets

(19)

(11) Publication number: **0 188 012 B1**

## EUROPEAN PATENT SPECIFICATION

(12)

(45) Date of publication of patent specification: 03.07.91    (51) Int. Cl.⁵: **F16L  47/06,** F16L 17/02, B29C 45/14

(21) Application number: 85200496.9

(22) Date of filing: 01.04.85

(54) **Plastic pipe body of thermoplastic material connected with a sealing body of a thermoplastic elastomer and pipe part or fitting connected with such a plastic pipe body.**

(30) Priority: 14.01.85 NL 8500073
14.01.85 NL 8500074
14.01.85 NL 8500075

(43) Date of publication of application:
23.07.86 Bulletin  86/30

(45) Publication of the grant of the patent:
03.07.91 Bulletin  91/27

(84) Designated Contracting States:
AT BE CH DE FR GB IT LI LU NL SE

(56) References cited:
EP-A- 0 030 062
EP-A- 0 031 620
EP-A- 0 031 978
FR-A- 2 396 233
FR-A- 2 500 370

(73) Proprietor: WAVIN B.V.
Händellaan 251
NL-8031 EM Zwolle(NL)

(72) Inventor: Beune, Johannes Hendrikus
62, Beekberg
NL-7772 DR Hardenberg(NL)

(74) Representative: van der Veken, Johannes Adriaan et al
EXTERPATENT B.V. P.O. Box 90649
NL-2509 LP 's-Gravenhage(NL)

## Description

The invention relates to a plastic retaining ring of thermoplastic polyolefin material provided with connecting means for removably connecting said retaining ring to a socket, said retaining ring being physically bonded over a portion of its length to a sealing body with a freely movable sealing sleeve of an elastomer comprising in its structure a portion based on a thermoplastic polymer being compatible with said thermoplastic polyolefin material and being bonded physically to the retaining ring by applying a flowable composition of said elastomer under pressure preferably by injection moulding.

Such a plastic retaining ring is known from EP-A- 0 031 620.

Such a retaining ring of polyethylene connected by moulding to a sealing sleeve of ethylene-propylene-diene terpolymer mixed with polyethylene is known from EP-A- 0 030 062.

This retaining ring presents the disadvantage that often the sealing sleeve separates from the plastic retaining ring due to high tensile forces to which the sealing sleeve is subjected during penetration of a male pipe part provided with such a retaining ring connected with a sealing sleeve.

Moreover, the resilient material of the sealing sleeve is a copolymer to be post cured.

Surprisingly it has been found that all the abovementioned disadvantages can be overcome by using a particular type of thermoplastic elastomer in combination with a particular type of plastic retaining ring.

It is therefore the aim of the invention to provide a combination of a plastic retaining ring and a sealing sleeve of a thermoplastic elastomer which can be manufactured in a simple way thereby bonding the sealing body excellently to the plastic retaining ring without any risk of separation of the sealing body from the retaining ring and providing an excellent sealing between pipes, particularly thermoplastic pipes.

This aim is attained in that the thermoplastic elastomer is a thermoplastic elastomer comprising in its structure an olefinic portion causing the thermoplastic or elastomeric properties of the thermoplastic elastomer, said sealing body with a sleeve having been formed by only applying a flowable composition of said elastomer onto said retaining ring.

In this retaining ring with sealing sleeve a very strong bond exists between both parts, which is very surprising as the connecting surface between said retaining ring and said sealing sleeve is rather small so that high tensile forces in axial direction may easily damage this connection.

A physical bond as used hereinbefore means an intimate connection between the molecules and various portions to be bonded, however, without a chemical reaction being involved. Examples of such physical bonds are welding, bonding by van der Waals forces etc.

A thermoplastic elastomer comprising at least an olefinic portion means e.g. that the olefinic portion forms part of a chain comprising an olefinic group providing elastomeric properties to the elastomer, said group being chemically bond to a non olefinic group, e.g. a polystyrene group.

The olefinic portion of the thermoplastic elastomer may also be in an elastomer wherein a cross linked ethylene-propylenedione elastomer is incorporated in a continuous phase of a polyolefin, such as polypropylene, which polyolefin forms the bond to the polyolefin of the pipe body.

Preferably said olefinic portion of the thermoplastic elastomer causing the thermoplastic properties of said thermoplastic elastomer is polyolefin based or said olefinic portion is part of an elastomer, said olefinic portion giving the elastomeric properties to the elastomer, in both cases a very excellent fixation of the sealing body to the plastic retaining ring is obtained.

Advantageously the plastic retaining ring comprises a polymer based on the same polyolefin as an olefin of the olefinic portion comprising thermoplastic elastomer.

More particularly the plastic retaining ring consists of polypropylene and the olefinic portion of the thermoplastic elastomer is propylene based or the plastic pipe body is of polyethylene and the olefinic portion of thermoplastic elastomer is ethylene based as in both cases the thermoplastic material of the plastic pipe body and the thermoplastic elastomer adhere excellently to each other after having applied the elastomer onto the pipe body by injection moulding, the physical bond is obtained by interfusing of the thermoplastic material of the retaining ring and the olefinic portion of the thermoplastic elastomer.

Very good connections between the sealing body and the retaining ring are obtained when the thermoplastic retaining ring consists of poly- ethylene or polypropylene and the thermoplastic rubber is a polypropylene and/or polyethylene portion comprising thermoplastic elastomer.

At last the invention comprises a pipe part or fitting connected with a plastic retaining ring according to the invention.

The invention will now be illustrated by means of an embodiment of the invention as shown in the drawing wherein:

Fig. 1 shows a retaining ring with a sealing body according to the invention;

Fig. 2 a retaining ring and a mould for connecting the retaining ring with a sealing body; and

Fig. 3 another embodiment of a retaining ring with a sealing body according to the invention;

Fig. 4 a socket pipe connected with a retaining ring according to Fig. 3; and

Fig. 5 a socket pipe connected with another retaining ring according to the invention

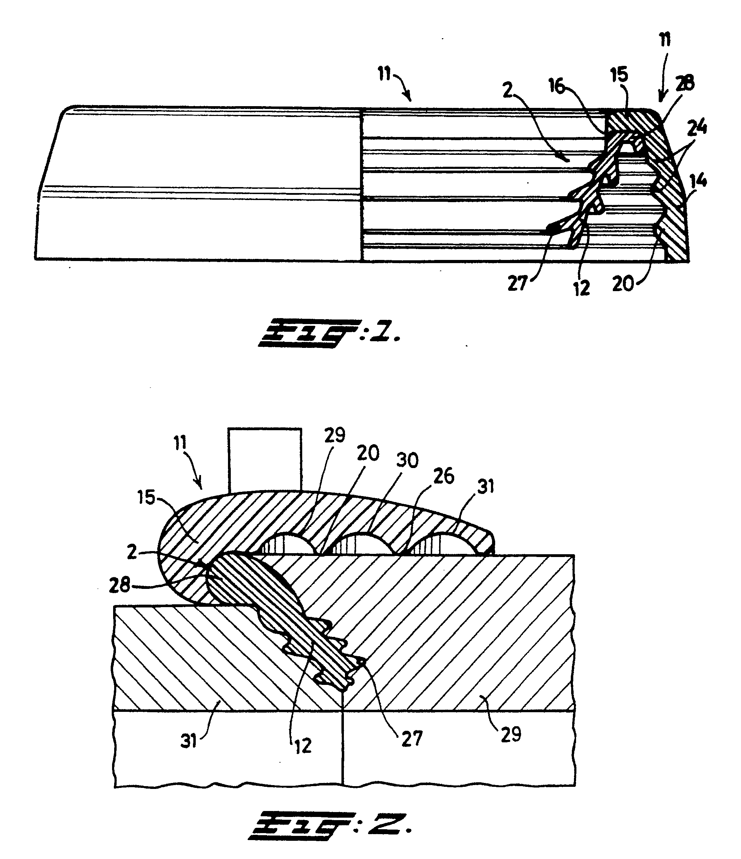

Fig. 1 shows a sealing ring 2 comprising a head portion 28 and a sealing sleeve 12. The sealing sleeve 12 is provided with sealing ribs 27.

This sealing ring 2 is connected with a plastic retaining ring 11 provided with wave-like projections 20, 24. The retaining ring 11 consists of polypropylene and the sealing ring consists of a polypropylene based thermoplastic rubber (manufactured by Monsanto under the tradename Santoprene®) and consisting of a continuous phase of polypropylene incorporating crosslinked ethylenepropylenedienerubber.

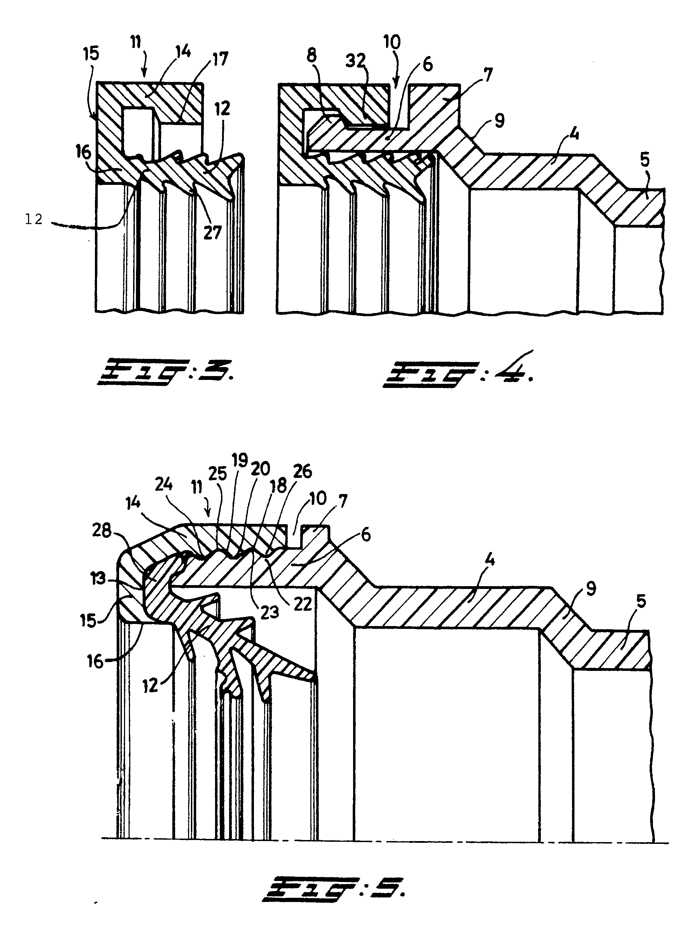

The integral connection between retaining ring 11 and sealing ring 2 has been obtained by placing the retaining ring 11 of polypropylene into an injection mould comprising mould parts 29 and 31 bounding a recess for forming the sealing body 2 (vide Fig. 2) and injecting the polypropylene based thermoplastic rubber into said recess.

Fig. 3. shows a retaining ring 11 of polypropylene and a sealing sleeve 12 being fixed to the inner leg 16 of the retaining ring by injection moulding. The inner leg 16 of the J shaped retaining ring is connected through a bottom part 15 with an outer leg 14 having an inner annular projection 17.

The retaining ring is connected with the outer side of a socket of a pipe part 5 (vide Fig. 4) by means of a snap fit connection of the retaining ring collar 32 with the first socket collar 8.

Collar 8 is provided on the end of an end widening 6 connected with the socket 4 through transition part 9. A second socket collar 7 bounds the axial movement of the retaining ring 11.

The interface 13 between the retaining ring 11 and the sealing body 12 is formed by interfused thermoplastic material of the retaining ring 11 and the thermoplastic elastomer consists of interfused thermoplastic rubber and polypropylene.

Fig. 5 shows another retaining ring 11 with a sealing body fixed to the retaining ring. The inner side of the outer leg 14 of the retaining ring is provided with wave-like projections 24, 20 and 26 cooperating with adapted wave-like projections 19, 23 and depressions 22, 25 at the outer side of the end widening 6 of the socket 4.

The retaining ring 11 consists of polypropylene and the thermoplastic rubber is a polystyrene-polyolefin-polystyrene rubber, the polyolefin portion being an ethylenepropylene polymer but of course an ethylenepolymer or propylenepolymer would also be convenient. A thermoplastic rubber of this type is manufactured by Shell under the trade name Kraton®.

## Claims

1. Plastic retaining ring (11) of thermoplastic polyolefin material provided with connecting means (20,24) for removably connecting said retaining ring to a socket, said retaining ring (11) being physically bonded over a portion of its length to a sealing body (2, 28) with a freely movable sealing sleeve (12) of an elastomer comprising in its structure a portion based on a thermoplastic polymer being compatible with said thermoplastic polyolefin material and being bonded physically to the retaining ring (11) by applying a flowable composition of said elastomer under pressure, preferably by injection moulding, characterized in that the elastomer is a thermoplastic elastomer comprising in its structure an olefinic portion causing the thermoplastic or elastomeric properties of the thermoplastic elastomer, said sealing body (2; 12, 28) with a sleeve (12) having been formed by only applying a flowable composition of said elastomer onto said retaining ring (11)

2. Plastic retaining ring according to claim 1, characterized in that the thermoplastic elastomer consists of a continuous phase of polypropylene incorporating precrosslinked ethylenepropylenediene rubber.

3. Plastic retaining ring according to claim 1, characterized in that the thermoplastic elastomer is a polystyrene- polyolefin-polystyrene elastomer.

4. Plastic retaining ring according to claim 2 and/or 3 characterized in that the plastic retaining ring comprises a polymer based on the same polyolefin as the olefin of the olefinic portion of the thermoplastic elastomer.

5. Plastic retaining ring according to claims 2, 3 and/or 4, characterized in that the plastic retaining ring consists of polypropylene and the olefinic portion of thermoplastic elastomer is propylene based.

6. Plastic retaining ring according to claims 2, 3 and/or 4, characterized in that the plastic retaining ring is of polyethylene and the olefinic portion of the thermoplastic elastomer is ethylene based.

7. A pipe part or fitting (4, 56) with a plastic retaining ring according to any one of claims 1-6.

## Revendications

1. Bague de retenue en matière plastique (11) faite d'un matériau en polyoléfine thermoplastique et pourvue de moyens de raccordement (20, 24) destinés à raccorder d'une manière amovible ladite bague de retenue à un embout femelle, cette bague de retenue (11) étant, sur une partie de sa longueur, assemblée physiquement avec un corps d'étanchéité(2, 28) comportant un fourreau d'étanchéité mobile librement (12) fait d'un élastomère comprenant, dans sa structure, une partie à base d'un polymère thermoplastique, compatible avec ledit matériau en polyoléfine thermoplastique et assemblé physiquement avec la bague de retenue (11) par application d'une composition fluide dudit élastomère sous pression, de préférence par un moulage par injection, caractérisée en ce que l'élastomère est un élastomère thermoplastique comprenant dans sa structure une partie oléfinique qui suscite les propriétés thermoplastiques ou élastomériques de l'élastomère thermoplastique, ledit corps d'étanchéité (2; 17, 28) qui comporte un fourreau (12) ayant été réalisé uniquement par application d'une composition fluide dudit élastomère sur ladite bague de retenue (11).

2. Bague de retenue en matière plastique selon la revendication 1, caractérisée en ce que l'élastomère thermoplastique est constitué d'une phase continue de polypropylène comprenant un caoutchouc éthylènepropylènediène préréticulé.

3. Bague de retenue en matière plastique selon la revendication 1, caractérisée en ce que l'élastomère thermoplastique est un élastomère polystyrène-polyoléfine-polystyrène.

4. Bague de retenue en matière plastique selon la revendication 2 et/ou 3, caractérisée en ce que la bague de retenue en matière plastique comporte un polymère à base de la même polyoléfine que l'oléfine de la partie oléfinique de l'élastomère thermoplastique.

5. Bague de retenue en matière plastique selon les revendications 2, 3 et/ou 4, caractérisée en ce que la bague de retenue en matière plastique est constituée de polypropylène, tandis que la portion oléfinique de l'élastomère thermoplastique est à base de propylène.

6. Bague de retenue en matière plastique selon les revendications 2, 3 et/ou 4, caractérisée en ce que la bague de retenue en matière plastique est en polyéthylène, tandis que la portion oléfinique de l'élastomère thermoplastique est à base d'éthylène.

7. Tronçon ou raccord de tuyau (4, 56) comportant une bague de retenue en matière plastique selon l'une quelconque des revendications 1 à 6.

## Ansprüche

1. Kunststoffhaltering (11) aus thermoplastischem Polyolefinmaterial, der mit einer Verbindungseinrichtung (20, 24) zum lösbaren Verbinden des Halterings mit einer Muffe versehen ist, wobei der Haltering (11) über einen Bereich seiner Länge physikalisch mit einem Dichtungselement (2, 28) mit einer frei beweglichen Dichtungshülse (12) aus einem Elastomer verbunden ist, das in seiner Struktur einen Anteil auf der Basis eines thermoplastischen Polymers umfaßt, das mit dem thermoplastischen Polyolefinmaterial verträglich und physikalisch mit dem Haltering (11) durch Aufbringen einer fließfähigen Zusammensetzung des Elastomers unter Druck, vorzugsweise durch Spritzgießformung, verbunden ist, dadurch gekennzeichnet, daß das Elastomer ein thermoplastisches Elastomer ist, das in seiner Struktur einen die thermoplastischen bzw. elastomeren Eigenschaften des thermoplastischen Elastomers herbeiführenden Olefinanteil umfaßt, und das Dichtungselement (2; 12, 28) mit einer Hülse (12) lediglich durch Aufbringen einer fließfähigen Zusammensetzung des Elastomer auf den Haltering (11) gebildet ist.

2. Kunststoffhaltering nach Anspruch 1, dadurch gekennzeichnet, daß das thermoplastische Elastomer aus einer kontinuierlichen Phase von Polypropylen unter Einbeziehung von vorvernetztem Ethylenpropylendien-Kautschuk besteht.

3. Kunststoffhaltering nach Anspruch 1, dadurch gekennzeichnet, daß das thermoplastische Elastomer ein Polystyrol-Polyolefin-Polystyrol-Elastomer ist.

4. Kunststoffhaltering nach Anspruch 2 und/oder 3, dadurch gekennzeichnet, daß der Kunststoffhaltering ein Polymer auf der Basis des gleichen Polyolefins wie das Olefin des Olefinteils des thermoplastischen Elastomers umfaßt.

5. Kunststoffhaltering nach den Ansprüchen 2, 3 und/oder 4, dadurch gekennzeichnet, daß der Kunststoffhaltering aus Polypropylen besteht und der Olefinanteil des thermoplastischen Elastomeren auf der Basis von Propylen ist.

6. Kunststoffhaltering nach den Ansprüchen 2, 3 und/oder 4, dadurch gekennzeichnet, daß der Kunststoffhaltering aus Polyethylen besteht und der Olefinanteil des thermoplastischen Elastomeren auf der Basis von Ethylen ist.

7. Rohrteil oder Fitting (4, 56) mit einem Kunststoffhaltering nach einem beliebigen der Ansprüche 1 bis 6.

_Fig:1._

_Fig:2._

*Fig: 3.*

*Fig: 4.*

*Fig: 5.*